# EUROPEAN PATENT APPLICATION

(11) **EP 2 680 133 A1**
(43) Date of publication of application: **01.01.2014**
(21) Application number: 12173897.5
(22) Date of filing: 27.06.2012
(51) Int. Cl.: G06F 9/44

(54) **Method, system and apparatus identifying workspace associations**

(71) Applicant: BlackBerry Limited, Waterloo, ON N2K 0A7 (CA)
(72) Inventor: Bukurak, David, Kanata Ontario K2K 3K1 (CA); Del Pasqua, Kieran, Cloud, Mississauga Ontario L4W 0B5 (CA); Altman, Benjamin, Mississauga Ontario L4W 0B5 (CA); Rydenhag, Daniel, Tobias, 41304 Gothenberg (SE); Johansson, Per, Ake, Daniel, 21140 Malmo (SE)
(74) Representative: MERH-IP Matias Erny Reichl Hoffmann

(57) **Abstract**

A method and apparatus for identifying workspace associations is provided. At a device comprising a processor, a memory, and a display, the processor manages two different workspaces distinguished by one or more of stored data at the memory and applications being associated with one or another of the two different workspaces. Provided at the display is one or more of: a current workspace identifier; and, an application association identifier identifying an association between an active application and a given one of the two different workspaces.

## Description

### FIELD

The specification relates generally to mobile devices, and specifically to a method, system and apparatus for identifying workspace associations.

### BACKGROUND

The evolution of computers is currently quite active in the mobile device environment. It is now well-known to including calendaring, contacts, and messaging functions in mobile devices. More recently, there has been a veritable explosion of the number and type of applications that are configured to the unique form factors and computing environments of mobile devices.

### SUMMMARY

An aspect of the specification provides a device comprising: a processor, a memory, and a display, the processor enabled to: manage two different workspaces distinguished by one or more of stored data at the memory and applications being associated with one or another of the two different workspaces; and provide, at the display, one or more of: a current workspace identifier; and, an application association identifier identifying an association between an active application and a given one of the two different workspaces.

The current workspace identifier can comprise wallpaper associated with the current workspace.

The current workspace identifier can be provided as a background image in the current workspace.

The current workspace identifier can be received in a push operation from a remote computing device, the processor further enabled to be forced to use the current workspace identifier received from the remote computing device.

The two different workspaces can comprise a first workspace and a second workspace, each of the first workspace and the second workspace associated with respective workspace identifiers, the current workspace identifier comprising a given one of the respective workspace identifiers associated with a current one of the first workspace and the second workspace.

A first workspace of the two different workspaces can comprise a private workspace and a second workspace of the two different workspaces can comprise a public workspace.

The processor can be further enabled to open the active application from the given one of the two different workspaces.

The application association identifier can comprise a graphic identifier provided with an icon associated with the active application.

Another aspect of the specification provides a method comprising: at a device comprising a processor, a memory, and a display, managing, via the processor, two different workspaces distinguished by one or more of stored data at the memory and applications being associated with one or another of the two different workspaces; and providing, at the display, one or more of: a current workspace identifier; and, an application association identifier identifying an association between an active application and a given one of the two different workspaces.

The current workspace identifier can comprise wallpaper associated with the current workspace.

The current workspace identifier can be provided as a background image in the current workspace.

The current workspace identifier can be received in a push operation from a remote computing device, and the method can further comprise being forced to use the current workspace identifier received from the remote computing device.

The two different workspaces can comprise a first workspace and a second workspace, each of the first workspace and the second workspace associated with respective workspace identifiers, the current workspace identifier comprising a given one of the respective workspace identifiers associated with a current one of the first workspace and the second workspace.

A first workspace of the two different workspaces can comprise a private workspace and a second workspace of the two different workspaces can comprise a public workspace.

The method can further comprise opening the active application from the given one of the two different workspaces.

The application association identifier can comprise a graphic identifier provided with an icon associated with the active application.

Yet a further aspect of the specification provides a computer program product, comprising a computer usable medium having a computer readable program code adapted to be executed to implement a method comprising: at a device comprising a processor, a memory, and a display, managing, via the processor, two different workspaces distinguished by one or more of stored data at the memory and applications being associated with one or another of the two different workspaces; and providing, at the display, one or more of: a current workspace identifier; and, an application association identifier identifying an association between an active application and a given one of the two different workspaces. The computer program product can comprise a non-transitory computer program product.

The current workspace identifier can received in a push operation from a remote computing device, and the method can further comprise being forced to use the current workspace identifier received from the remote computing device.

The two different workspaces can comprise a first workspace and a second workspace, each of the first workspace and the second workspace associated with respective workspace identifiers, the current workspace identifier comprising a given one of the respective workspace identifiers associated with a current one of the first workspace and the second workspace.

The application association identifier can comprises a graphic identifier provided with an icon associated with the active application.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system including a device for identifying workspace associations, according to non-limiting implementations.

Fig. 2 depicts a flowchart of a method for identifying workspace associations, according to non-limiting implementations.

Fig. 3 depicts a sequence at the device of Fig. 1 for implementing the method of Fig. 2, according to non-limiting implementations.

Fig. 4 depicts a continuation of the sequence of Fig. 3, according to non-limiting implementations.

Fig. 5 depicts the system of Fig. 1, with a current workspace identifier being transmitted from a server to the device, according to non-limiting implementations.

Fig. 6 depicts another sequence at the device of Fig. 1 for implementing the method of Fig. 2, according to non-limiting implementations.

### DETAILED DESCRIPTION

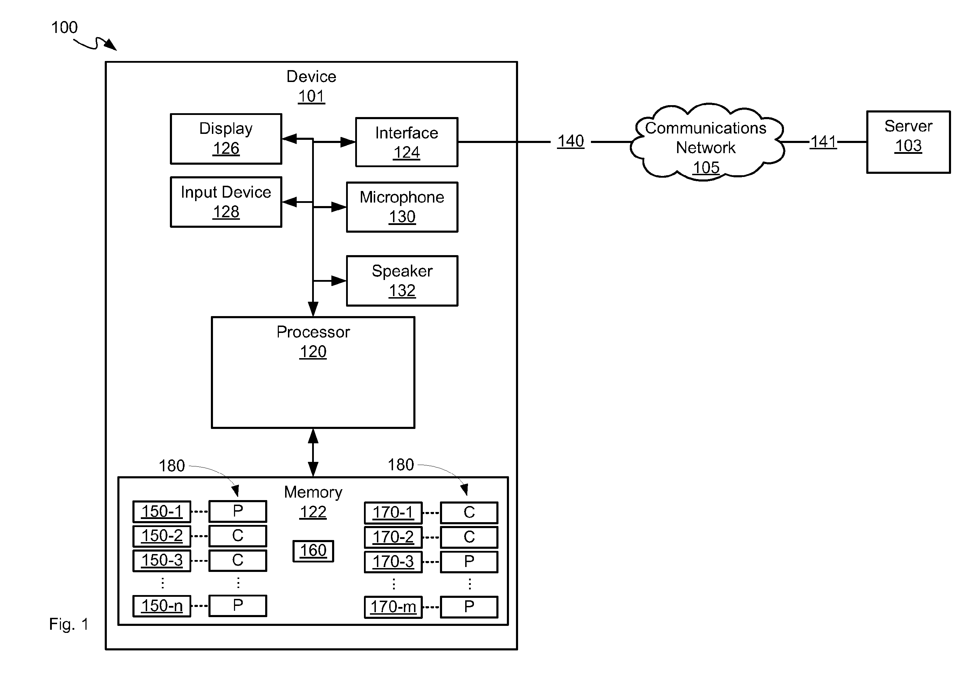

Fig. 1 depicts a system 100 comprising a device 101 for identifying a workplace association, according to non-limiting implementations. System 100 generally comprises device 101 in communication with a server 103 via at least one communications network 105, according to non-limiting implementations. The at least one communications network 105 will be interchangeably referred to hereafter as network 105. Device 101 comprises a processor 120 interconnected with a memory 122, a communications interface 124, a display 126 and an input device 128, and optionally a microphone 130 and speaker 132. It is further appreciated that device 101 communicates with a server 103 via interface 124, a link 140 between device 101 and network 105, and a link 141 between server 103 and network 105.

Device 101 further stores applications 150-1, 150-2, 150-3....150-n at memory 122. Applications 150-1, 150-2, 150-3....150-n will also be referred to hereafter generically as an application 150 and collectively as applications 150. Furthermore, device 101 can store any suitable number of applications 150. Device 101 further stores an application 160 for identifying a workplace association at memory 122, as described further below.

Device 101 further stores data 170-1, 170-2, 170-3....170-m at memory 122. Data 170-1, 170-2, 170-3....170-m will also be referred to hereafter generically as a set of data 170 and collectively as data 170. Further device 101 can store any suitable amount of data 170.

Each application 150 and each set of data 170 is further associated with an identifier 180 at memory 122 as indicated by tags 180, each tag 180 identifying a respective association between applications 150 and/or data 170 with one of at least two different workspaces. For example, given applications 150 and/or given sets of data 170 associated with a tag "C", as depicted, indicates that the given applications 150 and/or given sets of data 170 are associated with a workspace associated with a corporate environment. Similarly, other given applications 150 and/or other set of data 170 associated with a tag "P" indicates that the other given applications 150 and/or other sets of data 170 are associated with a workspace associated with a personal environment. It is appreciated that the "personal" and "corporate" workspaces described herein, as well as the associated tags "P" and "C", are provided only as examples of a first workspace and a second workspace and are not to be considered particularly limiting. Indeed, the association between each application 150 and each set of data 170 and a given workspace can be made in any suitable manner, including, but not limited to, tags, identifiers, database entries, database categories and the like.

Further, associations between applications 150 and/or data 170 and workspaces can also be provided via the absence of a tag 180 and the like: for example, in some implementations, applications 150 and data 170 associated with a corporate workspace can be tagged with a tag "C", while applications and data 170 associated with a personal workspace can be untagged, the association with a personal workspace (or at least a second workspace that is not the corporate workspace) implicit by the absence of a tag 180.

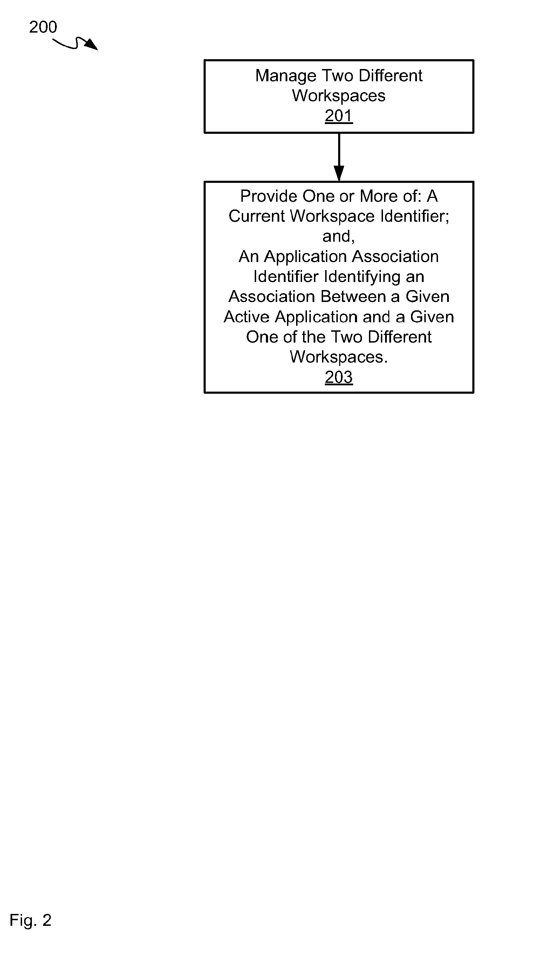

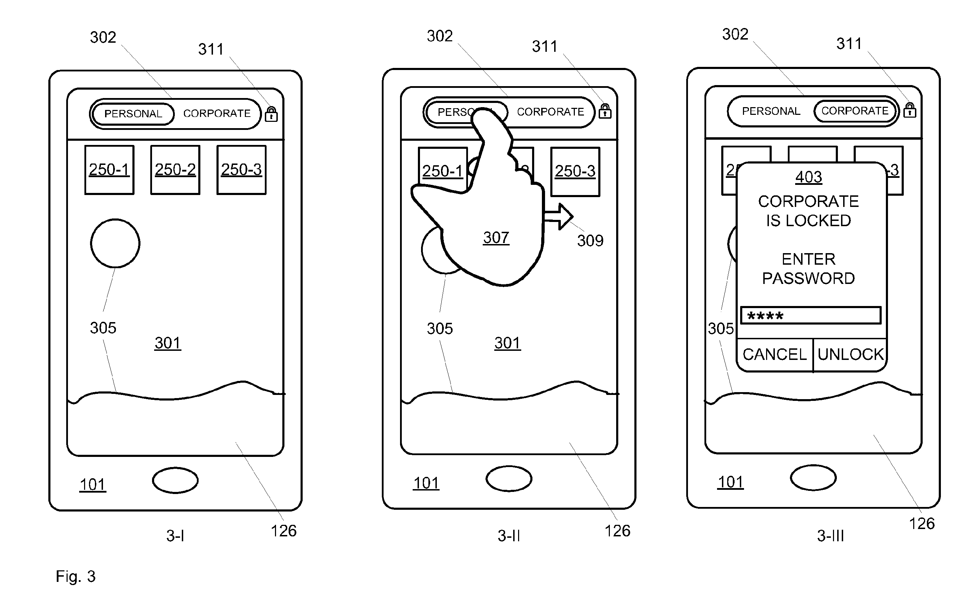

Workspaces will be further described below with reference to Figs. 2 and 3.

Further, workspace can interchangeably referred to as perimeters; for example, present implementations are appreciated to place perimeters around data 170 and applications 150 depending on tag associations, as will presently be explained.

In any event, processor 120 is generally enabled to: manage two different workspaces distinguished by one or more of stored data 170 at memory 122 and applications 150 being associated with one or another of the two different workspaces; and provide, at display 126, one or more of: a current workspace identifier; and, an application association identifier identifying an association between a given active application 150 and a given one of the two different workspaces.

Device 101 can be any type of electronic device that can be used in a self-contained manner to process applications 150, 160. Device 101 includes, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. Other suitable devices are within the scope of present implementations.

Server 103 generally comprises a server associated with a corporate entity that is, for example further associated with the corporate workspace of device 101. Server 103 is generally enabled to push data associated with the corporate workspace of device 101 to device 101. Such data can include, but is not limited to, a workspace identifier for the corporate workspace, as will be described below. Server 103 can otherwise be based on any well-known server environment including a module that houses one or more central processing units, volatile memory (e.g. random access memory), persistent memory (e.g. hard disk devices) and network interfaces to allow server 103 to communicate over link 141. For example, server 103 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 103 are contemplated. It is further more appreciated that server 103 can comprise any suitable number of servers that can perform different functionality of server implementations described herein. For example, as described below, system 100 can comprise sharing functionality and/or sharing infrastructure, and push functionality and/or push infrastructure. While this functionality will be described with reference to server 103, it is appreciated that sharing functionality and push functionality can be distributed between different servers that are specifically configured for such functionality.

Link 140 comprises any suitable link for enabling device 101 to communicate with network 105. Similarly, link 141 comprises any suitable link for enabling server 103 to communicate with network 105. Links 140, 141 can hence each include any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

It is appreciated that Fig. 1 further depicts a schematic diagram of device 101 according to non-limiting implementations. It should be emphasized that the structure of device 101 in Fig. 1 is purely an example, and contemplates a device that can be used for both wireless voice (e.g. telephony) and wireless data communications (e.g. email, web browsing, text, and the like). However, while Fig. 1 contemplates a device that can be used for telephony, in other implementations, device 101 can comprise a device enabled for implementing any suitable specialized functions, including but not limited to one or more of telephony, computing, appliance, and/or entertainment related functions.

Device 101 comprises at least one input device 128 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations. In specific non-limiting implementations described herein, input device 128 comprises a touch screen for receiving touch input data.

Input from input device 128 is received at processor 120 (which can be implemented as a plurality of processors, including but not limited to one or more central processors (CPUs)). Processor 120 is configured to communicate with a memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art recognize that memory 122 is an example of computer readable media that can store programming instructions executable on processor 120. Furthermore, memory 122 is also an example of a memory unit and/or memory module.

In particular, it is appreciated that memory 122 stores application 160, different from applications 150 that, when processed by processor 120, enables processor 120 to: manage two different workspaces distinguished by one or more of stored data 170 at the memory and applications 150 being associated with one or another of the two different workspaces; and provide, at display 126, one or more of: a current workspace identifier; and, an application association identifier identifying an association between a given active application 150 and a given one of the two different workspaces.

It is yet further appreciated that applications 150, 160 are examples of programming instructions stored at memory 122.

Processor 120 in turn can also be configured to communicate with a display 126, and optionally a microphone 130 and a speaker 132. Display 126 comprises any suitable one of or combination of CRT (cathode ray tube) and/or flat panel displays (e.g. LCD (liquid crystal display), plasma, OLED (organic light emitting diode), capacitive or resistive touch screens, and the like). When display 126 comprises a touch screen, it is appreciated that display 126 and input device 128 are combined into one apparatus. Microphone 130, when present, comprises any suitable microphone for receiving sound data. Speaker 132, when present, comprises any suitable speaker for providing sound data, audible alerts, audible communications from remote communication devices, and the like, at device 101.

In some implementations, input device 128 and display 126 are external to device 101, with processor 120 in communication with each of input device 128 and display 126 via a suitable connection and/or link.

Processor 120 also connects to interface 124, which can be implemented as one or more radios and/or connectors and/or network adaptors, configured to communicate with network 105 via link 140. In general, it will be appreciated that interface 124 is configured to correspond with the network architecture that is used to implement link 140, as described above. In other implementations a plurality of links with different protocols can be employed and thus interface 124 can comprise a plurality of interfaces to support each link.

In any event, it is appreciated that any suitable combination of interfaces is within the scope of present implementations.

Further, it should be understood that in general a wide variety of configurations for device 101 are contemplated.

Attention is now directed to Fig. 2 which depicts a flowchart of a method 200 for identifying workspace associations, according to non-limiting implementations. In order to assist in the explanation of method 200, it will be assumed that method 200 is performed using system 100. Furthermore, the following discussion of method 200 will lead to a further understanding of system 100 and its various components. However, it is to be understood that system 100 and/or method 200 can be varied, and need not work exactly as discussed herein in conjunction with each other, and that such variations are within the scope of present implementations.

It is appreciated that, in some implementations, method 200 is implemented in system 100 by processor 120 of device 101. Indeed, method 200 is one way in which device 101 can be configured. It is to be emphasized, however, that method 200 need not be performed in the exact sequence as shown, unless otherwise indicated; and likewise various blocks may be performed in parallel rather than in sequence; hence the elements of method 200 are referred to herein as "blocks" rather than "steps". It is also to be understood, however, that method 200 can be implemented on variations of system 100 as well.

At block 201, processor 120 manage two different workspaces distinguished by one or more of stored data 170 at memory 122 and active applications 150 being associated with one or another of the two different workspaces as described above. At block 203, processor provides, at display 126, one or more of: a current workspace identifier; and, an application association identifier identifying an association between a given active application 150 and a given one of the two different workspaces.

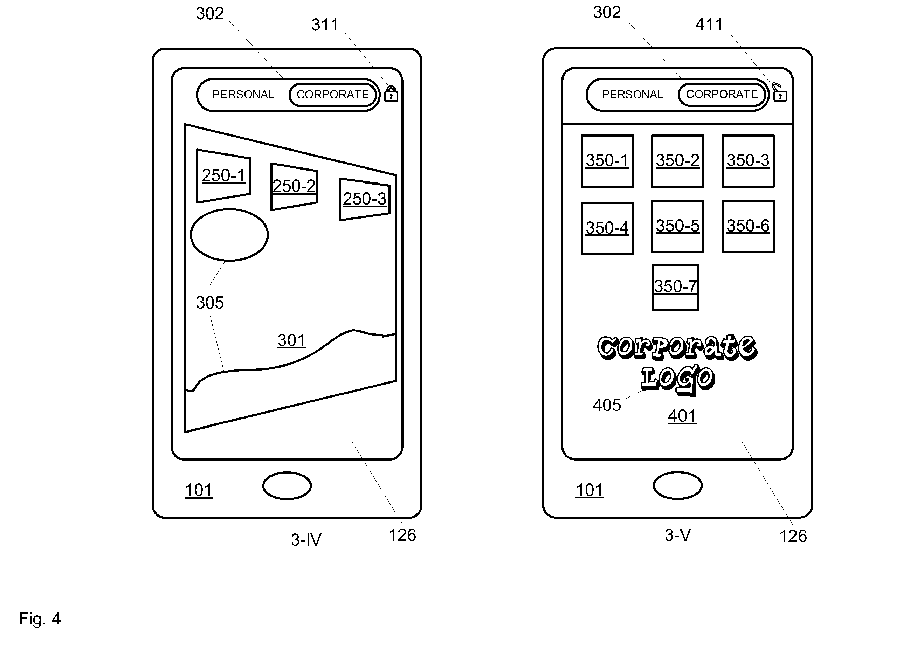

A non-limiting example of method 200 will now be described with reference to Figs. 3 and 4, which depicts perspective views 3-I, 3-II, 3-III, 3-IV and 3-V provided at display 126 of device 101, in a sequence, according to non-limiting implementations. In the non-limiting example of Figs. 3 and 4, it is assumed that input device 128 and/or display 126 comprises at least a touch screen device. Hence, implementations will be described with reference to touch input and touch screen events. However, it is appreciated that, in other implementations, other input devices can be used to assist with method 200.

It is further appreciated that each view 3-I, 3-II, 3-III, 3-IV and 3-V each shows graphic user interfaces (GUIs) associated with application 160.

It is yet further appreciated that the concept of workspaces is further illustrated in Figs. 3 and 4, as will presently be described.

View 3-I shows a graphic representation of a first workspace 301 comprising icons 250-1, 250-2, 250-3. Icons 250-1, 250-2, 250-3 will be referred to generically as an icon 250 and collectively as icons 250. It is appreciated that each icon 250 corresponds to an application 150 associated with first workspace 301. First workspace 301 can also be referred to as a "Personal" workspace, as indicated in virtual slider switch 302: in other words, at view 3-I, the text "Personal" is highlighted on slider switch 302.

Further, each icon 250 of first workspace 301 is associated with a respective application 150 which is in turn associated with tags "P" as depicted in Fig. 1. Indeed, in first workspace 301, only those icons 250 associated with applications with tags "P"are provided at workspace 301. When an icon 250 is actuated, for example via a touch screen interaction, the corresponding application 150 will be processed by processor 120 and launched for interaction with a user via display 126 and input device 128.

It is yet further appreciated that processor 120 generally restricts access of applications 150 associated with first workspace 301 to data 170 associated with first workspace 301. In other words, applications 150 associated with first workspace 301 can only access data 170 with tags "P". Access to data 170 associated wither tags "C" is blocked; for example, when a given application 150 associated with first workspace 301 is opened, data 170 associated with tags "C" is not visible to the given application 150. Hence, first workspace 301 can be defined both by a graphic view 3-I in which only those icons 250 associated with applications 150 that are in turn associated with first workspace 301/"Personal" workspace, are provided at display 126. However, first workspace 301 can further be defined by the association of applications 150 and data 170 with tags 180 associated with first workspace 301, as well as the restriction of access to data 170 associated with first workspace 301.

From this perspective, at block 201, processor 120 manages first workspace 301 by one or more of: providing only those icons 250 associated applications 150 that are in turn associated with first workspace 301, at display 126, when first workspace 301 is current; and managing associations between applications 150, data 160 and first workspace 301; and restricting access to data 170 by applications 150 associated with first workspace 301 based associations of data 170 with first workspace 301 or a second workspace (e.g. second workspace 401 as described below). Hence, workspace 301 can also be referred as a perimeter around applications 150 and data 170 associated therewith. Put another way, a perimeter is placed around applications 150 and data 170 based an association with tags "P", such that applications 150 associated with tag "C" cannot access or interact with applications 150 and data 170 associated with tag "P". This prevents cross-contamination of applications 150 and data 170 associated with different tag types.

In any event, view 3-I further shows at least one identifier 305 associated with first workspace 301. It is yet further appreciated that at least one identifier 305 is provided at display 126 only when first workspace 301 is a current workspace. Hence, at least one identifier 305 comprises a current workspace identifier. When first workspace 301 is no longer a current workspace, at least one identifier 305 is no longer provided and a current workspace identifier associated with whatever workspace is current is provided: for example see the discussion below with respect to view 3-V.

In any event, it is appreciated that at block 303, processor 120 provides at least one identifier 305 when first workspace 301 becomes a current workspace.

Further, at least one identifier 305 can comprise any suitable identifier. In depicted implementations, at least one identifier 305 comprises features in a graphical identifier, for example an electronic photo associated with first workspace and stored at memory 122 (e.g. as data 170 tagged with a tag "P"). However, in other implementations, at least one identifier 305 can comprise one or more a given colour, given wallpaper, a background image and the like, all provided in an electronic format.

Attention is next directed to view 3-II, substantially similar to view 3-I but further depicting a finger of a hand 307 interacting with slide switch 302. A touch event is hence detected at display 126 in the area of slide switch 302, in which slide switch 302 is moved from a left hand position, in which text "Personal" is highlighted, to a right hand position, in which text "Corporate" is highlighted. The movement of hand 307 is indicated by arrow 309 indicating that hand 307 is moving from left to right, and in turn moving slide switch 302 from the left hand position to the right hand position.

Views 3-I to 3-III depict a further aspect of workspace management by processor 120, in that one or more of first workspace 301 and a second workspace 401, as described below with reference to Fig. 4, can be locked. For example, as indicated by icon 311, a second workspace 401, associated with a "Corporate" workspace, is locked but can be unlocked by receipt of a password that is requested via a GUI 403, as depicted at view 3-III, GUI 403 provided when processor 120 detects the touch event associated with slide switch 302, described above.

Once password data that matches stored password data is received at GUI 403, processor 120 switches from first workspace 301 to second workspace 401 in any suitable manner. For example, with reference to Fig. 4 and as depicted in view 3-IV, the GUI associated with first workspace 301 can be animated, appearing to flip upside down to show view 3-V depicted in Fig. 4. Indeed, view 3-V depicts second workspace 401 as described hereafter. In other words, the current workspace changes from first workspace 301 to second workspace 401. Furthermore, once password data is received at GUI 403 that matches stored password data, second workspace 401 is unlocked, as indicated at view 3-V by icon 411; in other words, icon 311 is replaced by icon 411.

Furthermore, as depicted in view 3-V, a graphical representation of second workspace 401 comprises icons 350-1, 350-2, 350-3, 350-4, 350-5, 350-6, 350-7. Icons 350-1, 350-2, 350-3, 350-4, 350-5, 350-6, 350-7 will be referred to generically as an icon 350 and collectively as icons 350. It is appreciated that each icon 350 corresponds to an application 150 associated with second workspace 401. Second workspace 401 can also be referred to as a "Corporate" workspace, as indicated in virtual slider switch 302: in other words, at views 3-V, the text "Corporate" is highlighted on slider switch 302.

Further, each icon 350 of second workspace 401 is associated with a respective application 150 which is in turn associated with tags "C". Indeed, in second workspace 401, only those icons 350 associated with applications with tags "C" are provided at workspace 301. When an icon 350 is actuated, for example via a touch screen interaction, the corresponding application 150 will be processed by processor 120 and launched for interaction with a user via display 126 and input device 128. Further, when second workspace 401 is unlocked, as described above, icons 350 become accessible via touch events, such that corresponding applications 150 can be accessed.

It is yet further appreciated that processor 120 generally restricts access of applications 150 associated with second workspace 401 to data 170 associated with second workspace 401. In other words, applications 150 associated with second workspace 401 can only access data 170 with tags "C".

Hence, second workspace 401 can be defined by view 3-V in which only those icons 350 associated applications 150 that are in turn associated with second workspace 401, are provided at display 126. However, second workspace 401 can further be defined by the association of applications 150 and data 170 with tags 180 associated with second workspace 401, as well as the restriction of access to data 170 associated with second workspace 401. Put another way, a perimeter is placed around applications 150 and data 170 based an association with tags "C", such that applications 150 associated with tag "P" cannot access or interact with applications 150 and data 170 associated with tag "C". This prevents cross-contamination of applications 150 and data 170 associated with different tag types.

Hence, from this perspective, at block 201, processor 120 manages first workspace 301 and second workspace 401 by one or more of: determining which workspace 301, 401 is current and providing only those icons 250, 350 associated applications 150 that are in turn with the current workspace, at display 126; managing associations between applications 150, data 160 and workspaces 301, 401; and restricting access to data 170 by applications 150 based on mutual associations between applications 150, data 170 and workspaces 301, 401. In other words, processor 120 restricts access of applications 150 associated with first workspace 301 to data 170 associated with first workspace 301, and restricts access of applications 150 associated with second workspace 401 to data 170 associated with second workspace 401. Hence, "Personal" applications 150 cannot access "Corporate" data 170, and "Corporate" applications 150 cannot access "Personal" data 170.

It is further appreciated that once second workspace 401 becomes a current workspace, at least one identifier 405 is provided at second workspace 401, at least one identifier 405 associated with second workspace 401.

It is yet further appreciated that at least one identifier 405 is provided at display 126 only when second workspace 401 is a current workspace. Hence, at least one identifier 405 further comprises a current workspace identifier. When second workspace 401 is no longer a current workspace, at least one identifier 405 is no longer provided and a current workspace identifier associated with whatever workspace is current is provided: for example, first workspace 301 could again become the current workspace and then at least one identifier 305 is again provided at display 126.

In any event, it is appreciated that at block 303, processor 120 provides at least one identifier 405 when second workspace 401 becomes the current workspace.

Further, at least one identifier 405 can comprise any suitable identifier. In depicted implementations, at least one identifier 405 comprises data associated with the corporate entity that is in turn associated with second workspace and/or server 103. However, in other implementations, at least one identifier 405 can comprise one or more a given colour, given wallpaper, a background image and the like, all provided in an electronic format.

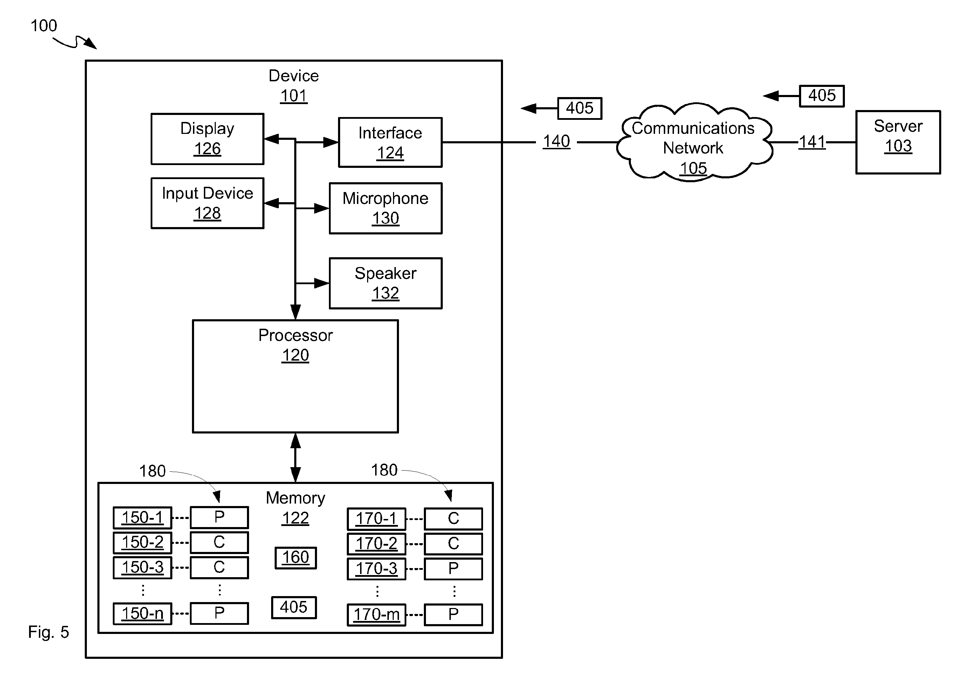

It is further appreciated that, at least one identifier 405 can be received in a push operation from a remote computing device, such as server 103, processor 120 forced to use at least one identifier 405 when the current workspace identifier comprises at least one identifier 405. For example, attention is next directed to Fig. 5, which is substantially similar to Fig. 1 with like elements having like numbers in which server 103 transmits at least one identifier 405 to device 101 via network 105. It is appreciated that at least one identifier 405 is transmitted with data indicating that at least one identifier 405 is to be used to identify second workspace 401. In any event, at least one identifier 405 is received at device 101 and stored at memory 122. At least one identifier 405 can optionally be tagged with a tag "C", indicating an association with second workspace 401. Regardless, application 160 causes at least one identifier 405 to be used to identify second workspace 401 when second workspace 401 is the current workspace.

Attention is now directed to Figs. 3 and 4, and specifically a comparison of views 3-I and 3-V. It is appreciated from views 3-I and 3-V that processor 120 provides a current workspace identifier at display 126, depending on which of workspaces 301, 401 is a current workspace. In other words, processor 120 manages two different workspaces comprising first workspace 301 and second workspace 401, each of first workspace 301 and second workspace 401 associated with respective workspace identifiers 305, 405, the current workspace identifier comprising a given one of the respective workspace identifiers 305, 405 associated with a current one of first workspace 301 and second workspace 401.

It is yet further appreciated that as second workspace 401 can be locked, second workspace 401 comprises a private workspace. As first workspace 301 is not lockable, first workspace 301 comprises a public workspace. Hence, processor 120 is further enabled to manage the private and public aspects of workspaces 301, 401. In other words, processor 120 is enabled to manage associated passwords and when a lockable workspace is locked or unlocked. For example, in some implementations, second workspace 401 must be unlocked whenever second workspace 401 becomes a current workspace; for example, in view 3-V, second workspace 401 is both current and unlocked, but when slider switch 302 is actuated back to "Personal", and first workspace 301 again becomes current, second workspace 401 is automatically locked and/or relocked. Alternatively, once second workspace 401 is unlocked, second workspace 401 remains unlocked until a specific command is received at device 101, for example via input device 128, to lock second workspace 401. In yet further implementations, second workspace 401 remains unlocked for a given period of time after touch event associated with second workspace 401; in other words, when second workspace 401 remains unaccessed via input device 128 for a given period of time, second workspace 401 is relocked. Other schemes for locking second workspace 401 are within the scope of present implementations. Further, while present implementations are described with respect to first workspace 301 comprising an unlockable workspace, in other implementations, first workspace 301 can be locked similar to second workspace 401.

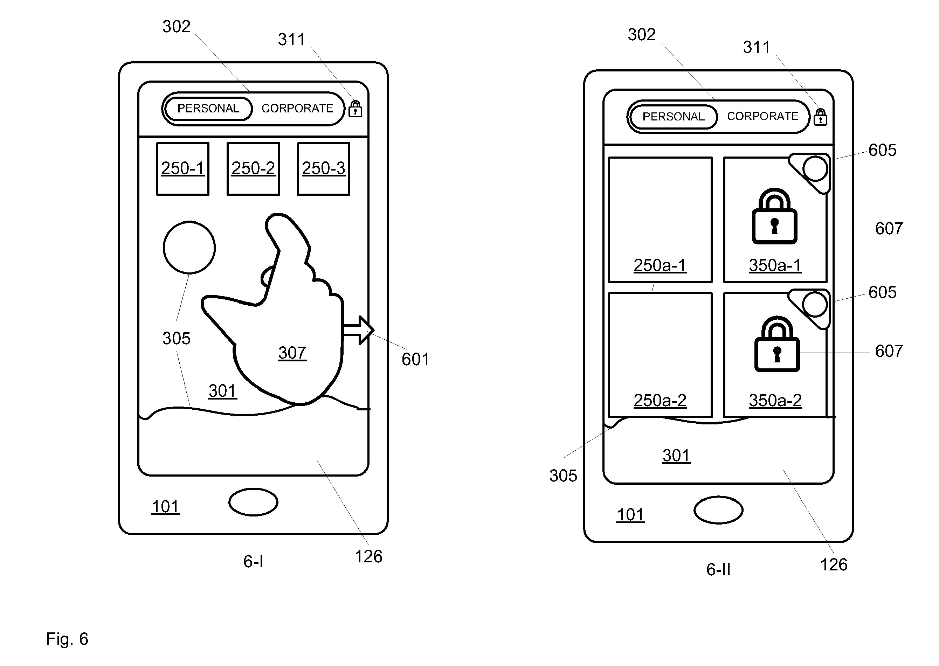

Attention is next directed to Fig. 6 which depicts a yet a further non-limiting example of method 200, where Fig. 6 depicts perspective views 6-I and 6-II provided at display 126 of device 101, in a sequence, according to non-limiting implementations. In the non-limiting example of Fig 6, it is again assumed that input device 128 and/or display 126 comprises at least a touch screen device. Hence, implementations will be described with reference to touch input and touch screen events. However, it is appreciated that, in other implementations, other input devices can be used to assist with method 200. It is further appreciated that each view 6-I, 6-II each shows graphic user interfaces (GUIs) associated with application 160.

It is further assumed in Fig. 6 that at least four applications 150 are active applications. In other words, at least four applications 150 have been previously opened: two first workspace applications 150 (tagged with tag "P") and two second workspace applications 150 (tagged with tag "C"), as described above. It is further assumed that each active application 150 is presently running in the background such that a graphic representation of first workspace 301 is provided at display 126 at view 6-I, which is otherwise similar to view 3-I, with like elements having like numbers.

In any event, to change from view 6-I to view 6-II, which shows indicates which applications 150 are currently running, a touch event associated with switching to view 6-II is detected at display 126 at view 6-1. For example, a finger of hand 307 touches display 601 in first workspace 301, away from icons 250, and slides to the right, as indicated by arrow 601. However other touch events and touch data are within the scope of present implementations.

The detected touch event causes processor 120 to change from view 6-I to view 6-II which indicates which applications 150 are currently running. As four applications 150 are currently running, four icons 250a-1, 250a-2, 350a-1, 350a-2 are provided. Icons 250a-1, 250a-2 (interchangeably hereafter referred to collectively as icons 250a and generically as an icon 250a) each correspond to an application 150 associated with first workspace 301. Similarly, icons 350a-1, 350a-2 (interchangeably hereafter referred to collectively as icons 350a and generically as an icon 350a) each correspond to an application 150 associated with second workspace 401.

It is appreciated that while view 6-II comprises first workspace 301 (and hence first workspace identifiers 305 are also provided as a background image, wallpaper or the like), icons 250a, 350a are not limited to icons associated with applications 150 that are in turn associated with first workspace 301. Rather icons 350a associated with second workspace 401 are provided in addition to icons 250a associated with the current first workspace 301. As such, at block 203 of method 200, to identify applications 150 associated with second workspace 401, processor 120 further provides at display 126 an application association identifier 605 identifying an association between an active application 150 and a given one of the two different workspaces 301, 401. Specifically, application association identifier 605, referred to hereafter as identifier 605, is associated with second workspace 401. Hence, while first workspace 301 is presently the current workspace (as a graphical representation of first workspace 301 is provided at display 126 and hence, for example, only applications 150 associated with first workspace 301 can be opened), active applications 150 associated with second workspace 401 are identified and accessible.

View 6-II further indicates, however, that second workspace 401 is presently locked, as indicated by the presence of icon 311. Hence, as each active application 150 associated with icon 350a is in turn associated with locked second workspace 401, each active application 150 associated with each icon 350a is also locked, as indicated by optional identifier 607 at each icon 350a. Hence, when an icon 350a is actuated, a GUI similar to GUI 403 is provided to receive password data and unlock one or more of the associated applications 350 and second workspace 401. In this manner, processor 120 makes active applications 150 associated with second workspace 401 accessible from first workspace 301, but further restricts access thereto.

In general, active applications 150 associated with second workspace 401 are locked when access is provided from first workspace 301 whenever second workspace 401 is, itself, locked. When second workspace 401 is not locked, then active applications 150 associated second workspace 401 are also not locked when access is provided from first workspace 301. Such restrictions prevent active applications 150 and data 170 associated with second workspace 401 (such as sensitive corporate data) from being accessed from first workspace 301 unless the correct password data is received.

Hence, in general, methods and device for identifying workspace associations have been provided. Specifically, a workspace can be identified via a suitable identifier such that a current workspace is identified via a current workspace identifier, which can change based on which workspace is presently current. Such current workspace identifiers identify the current workspace so that it is understood from which workspace an application is made active. Further graphic representations of active applications, including but not limited to associated icons, are provided with an application association identifier to identify an association between the active application and a workspace. In this manner, when an active application is accessed (and/or unlocked) from a current which is not the workspace with which the active application is associated, it is understood that the active application is associated with a different workspace. Hence, data associated the current workspace is understood not to be accessible from the active application associated with the workspace from which the active application is associated. In other words, when active application 150 associated with icon 350a-l is accessed from first workspace 301, as in view 6-II, data 170 associated with first workspace 301 (i.e. data 170 tagged with a tag "P") is not accessible from the active application 150 associated with icon 350a-1.

Those skilled in the art will appreciate that in some implementations, the functionality of devices 101 can be implemented using pre-programmed hardware or firmware elements (e.g., application specific integrated circuits (ASICs), electrically erasable programmable read-only memories (EEPROMs), etc.), or other related components. In other implementations, the functionality of 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device (101) comprising:
a processor (120), a memory (122), and a display (126), the processor (120) enabled to:
manage two different workspaces distinguished by one or more of stored data at the memory (122) and applications being associated with one or another of the two different workspaces; and
provide, at the display (126), one or more of:
a current workspace identifier; and,
an application association identifier identifying an association between an active application and a given one of the two different workspaces.

2. The device (101) of claim 1, wherein the current workspace identifier comprises one or more of wallpaper associated with the current workspace and a background image in the current workspace.

3. The device (101) of claim 1 or 2, wherein the current workspace identifier is received in a push operation from a remote computing device (101), the processor (120) further enabled to be forced to use the current workspace identifier received from the remote computing device (103).

4. The device (101) of any preceding claim, wherein the two different workspaces comprise a first workspace and a second workspace, each of the first workspace and the second workspace associated with respective workspace identifiers, the current workspace identifier comprising a given one of the respective workspace identifiers associated with a current one of the first workspace and the second workspace.

5. The device (101) of any preceding claim, wherein a first workspace of the two different workspaces comprises a private workspace and a second workspace of the two different workspaces comprises a public workspace.

6. The device (101) of any preceding claim, wherein the processor (120) is further enabled to open the active application from the given one of the two different workspaces.

7. The device (101) of any preceding claim, wherein the application association identifier comprises a graphic identifier provided with an icon associated with the active application.

8. A method comprising:
at a device (101) comprising a processor (120), a memory (122), and a display (126), managing, via the processor (120), two different workspaces distinguished by one or more of stored data at the memory (122) and applications being associated with one or another of the two different workspaces; and
providing, at the display (126), one or more of:
a current workspace identifier; and,
an application association identifier identifying an association between an active application and a given one of the two different workspaces.

9. The method of claim 8, wherein the current workspace identifier comprises one or more of wallpaper associated with the current workspace and a background image in the current workspace.

10. The method of claim 8 or 9, wherein the current workspace identifier is received in a push operation from a remote computing device (101), the method further comprising being forced to use the current workspace identifier received from the remote computing device (103).

11. The method of any of claims 8 to 10, wherein the two different workspaces comprise a first workspace and a second workspace, each of the first workspace and the second workspace associated with respective workspace identifiers, the current workspace identifier comprising a given one of the respective workspace identifiers associated with a current one of the first workspace and the second workspace.

12. The method of any of claims 8 to 11, wherein a first workspace of the two different workspaces comprises a private workspace and a second workspace of the two different workspaces comprises a public workspace.

13. The method of any of claims 8 to 12, further comprising opening the active application from the given one of the two different workspaces.

14. The method of any of claims 8 to 13, wherein the application association identifier comprises a graphic identifier provided with an icon associated with the active application.

15. A computer program product, comprising a computer usable medium having a computer readable program code adapted to be executed to implement any of the steps of the method of claims 8 to 14.
